# EUROPEAN PATENT SPECIFICATION

(11) **EP 2 716 507 B1**
(45) Date of publication and mention of the grant of the patent: **16.03.2016**
(21) Application number: 12793883.5
(22) Date of filing: 17.05.2012
(51) Int. Cl.: B60R 22/46

(54) **SEATBELT RETRACTOR**
SITZGURTEINZUG
RÉTRACTEUR DE CEINTURE DE SÉCURITÉ

(30) Priority: 31.05.2011 JP 2011121463
(43) Date of publication of application: 09.04.2014
(73) Proprietor: Ashimori Industry Co., Ltd., Osaka-shi, Osaka 550-0014 (JP)
(72) Inventor: NAKAYAMA Tomoe, Settsu-shi Osaka 566-0001 (JP); YAMANE Eri, Settsu-shi Osaka 566-0001 (JP)
(74) Representative: Kilian Kilian & Partner
(86) International application number: PCT/JP2012/062601
(87) International publication number: WO 2012/165152

(56) References cited:
- JP-A- 2001 260 811
- JP-A- 2005 280 465
- JP-A- 2005 280 667
- JP-A- 2006 256 396
- JP-A- 2008 075 739
- JP-A- 2010 202 082
- US-A1- 2005 156 073

## Description

### Technical Field

The present invention relates to a seatbelt retractor including a mechanism for removing the slack of webbing in emergency situations.

### Background Art

There have been conventionally proposed various techniques related to seatbelt retractors that include a pretensioner mechanism for removing the slack of webbing in emergency situations such as a vehicle crash.

For example, Patent Document 1 proposes a seatbelt retractor including a windup drum that winds the webbing thereon, and a pretensioner mechanism including a gas generating member, a tubular cylinder having a rectangular cross-section, a piston that moves in the cylinder upon receipt of a gas pressure generated by the gas generating member, and a pinion gear body that rotates through meshing with a rack rack formed in the piston and is capable of rotating in association with the windup drum.

In the seatbelt retractor of Patent Document 1, in consideration of drawing of the webbing after the webbing is wound through the operation of the pretensioner mechanism, a gas release hole that connects the inside and outside of the cylinder is provided in the piston for lowering a gas pressure in the cylinder.

A seatbelt retractor comprising the features of the preamble of claim 1 is disclosed in US 2005/156073 A1.

### Prior Art Document

### Patent Document

Patent Document 1: Japanese Patent Application Laid-Open No. 2009-241867

### Summary of the Invention

### Problem to be Solved by the Invention

Unfortunately, if a gas release hole is provided in the piston as in the seatbelt retractor of Patent Document 1 above, a gas is released starting from the initial state when the pretensioner mechanism operates. Accordingly, in order to obtain a pressure required for driving the piston, an output of the gas generating member needs to be set in consideration of a pressure loss amount due to the release of a gas.

The present invention therefore has an object to provide a seatbelt retractor capable of reducing a gas pressure loss to effectively use an output of a gas generating member for driving a piston.

### Means to Solve the Problem

The object is solved by a seatbelt retractor comprising the features of claim 1.

Further preferred embodiments of the invention are defined by the dependent claims.

A seatbelt retractor according to a first aspect includes a windup drum that winds webbing, and a pretensioner unit that causes the windup drum to rotate in a windup direction of the webbing. The pretensioner unit includes a pinion gear configured to rotate in association with the windup drum, a piston that includes a rack for meshing with the pinion gear and causes the windup drum to rotate in the windup direction through the pinion gear, a tubular cylinder that movably holds the piston, and a gas generating member that fills an interior space of the cylinder with a gas generated to drive the piston by a pressure of the gas. The tubular cylinder includes, on a side surface thereof, a through hole for releasing the gas to an outside of the cylinder. The through hole is provided to be located: in an initial position of the piston before gas generation, at a position at which the interior space of the cylinder and the outside are not continuous with each other through the through hole; and after gas generation, at a position at which the interior space of the cylinder that has changed upon moving of the piston and the outside enter a continuous state to be continuous with each other through the through hole.

According to a second aspect, in the seatbelt retractor of the first aspect, the through hole is provided at a position at which the continuous state is obtained upon a force in the windup direction being first applied to the windup drum by the operation of the pretensioner unit.

According to a third aspect, in the seatbelt retractor of the first or second aspect, the pretensioner unit further includes a clutch mechanism that causes a pawl to project upon rotation of the pinion gear and causes the pawl to be engaged with a gear of the windup drum, to thereby rotate the windup drum and the pinion gear in association with each other, and the through hole is provided at a position at which the continuous state is obtained upon the pawl being engaged with the gear of the windup drum.

According to a fourth aspect, in the seatbelt retractor of any one of the first to third aspects, a seal member is provided on a surface of the interior space side of the piston.

According to a fifth aspect, in the seatbelt retractor of any one of the first to fourth aspects: the pretensioner unit further includes a block member arranged adjacent to a part of the side surface of the cylinder; and in a circumferential direction of the side surface of the cylinder, the through hole is provided at such a position that the gas is released as an exhaust gas to a specific space defined by an inner wall of the block member and the part of the side surface of the cylinder.

According to a sixth aspect, in the seatbelt retractor of the fifth aspect: the specific space includes an opened portion that is not surrounded by the inner wall of the block member and the part of the side surface of the cylinder; in an assembled state, the seatbelt retractor is configured such that a heat-resisting member is located at the opened portion; and the through hole is provided such that in the specific space, the exhaust gas released from the through hole first impacts the heat-resisting member located at the opened portion.

According to a seventh aspect, in the seatbelt retractor of the fifth or sixth aspect, the block member includes a passage that guides the exhaust gas from the specific space, and the passage is configured in a complex manner in the block member.

According to an eighth aspect, in the seatbelt retractor of the seventh aspect, the pretensioner unit further includes a cover plate that covers the cylinder and the block member, and a bead is provided to the cover plate at such a position as to cover at least one of the specific space and the passage in said block member.

### Effects of the Invention

According to the first aspect, the interior space of the pipe cylinder is kept sealed when a gas is first generated, which enables to effectively use a pressure of the generated gas for a traveling force of the piston.

According to the second and third aspects, in a situation in which the webbing is tight and thus the windup drum does not rotate in the windup direction, the pretensioner unit can be operated safely without application of an excessive load to the pretensioner unit due to the gas pressure.

According to the fourth aspect, the sealability of the interior space of the pipe cylinder can be enhanced further.

According to the fifth aspect, an exhaust gas is released to a surrounded specific space, which enables to reduce a risk that a high-temperature exhaust gas will leak to the outside of the pretensioner unit.

According to the sixth aspect, an exhaust gas released from the through hole first impacts a heat-resisting member, which enables to lower the temperature of the exhaust gas.

According to the seventh aspect, the exhaust gas is guided through a complex passage, which prevents the escape of sparks to the outside of the pretensioner unit.

According to the eighth aspect, the cover plate can be prevented from deforming due to an exhaust gas.

These and other objects, features, aspects and advantages of the present invention will become more apparent from the following detailed description of the present invention when taken in conjunction with the accompanying drawings.

### Brief Description of Drawings

Fig. 1 is a perspective view showing a seatbelt retractor according to an embodiment of the present invention.
Fig. 2 is an exploded perspective view showing the seatbelt retractor disassembled in units of components each implementing a predetermined function.
Fig. 3 is an exploded perspective view showing a windup drum and a pretensioner unit disassembled in further detail.
Fig. 4 is a vertical cross-sectional view of the pretensioner unit in a standby state.
Fig. 5 is a perspective view of a pipe cylinder that forms the pretensioner unit.
Fig. 6 is a perspective view of a cover plate.
Fig. 7 is a view for describing the operation of the pretensioner unit.
Fig. 8 is a vertical cross-sectional view of the pretensioner unit.
Fig. 9 is a view for describing the operation of the pretensioner unit.
Fig. 10 is a view for describing the operation of the pretensioner unit.
Fig. 11 is a view for describing the operation of the pretensioner unit.
Fig. 12 is a vertical cross-sectional view of the pretensioner unit.
Fig. 13 is a perspective view showing the pretensioner unit viewed from a surface side on which the pretensioner unit is mounted to a housing unit.
Fig. 14 is a view showing a flow of an exhaust gas passing through a base block.
Fig. 15 is an outline view showing the pretensioner unit viewed from the cover plate side.

### Description of Embodiment

Hereinafter, an embodiment is described with reference to the drawings. Elements denoted by like references in different drawings represent like or corresponding elements.

### <Embodiment>

### [1. Overall configuration]

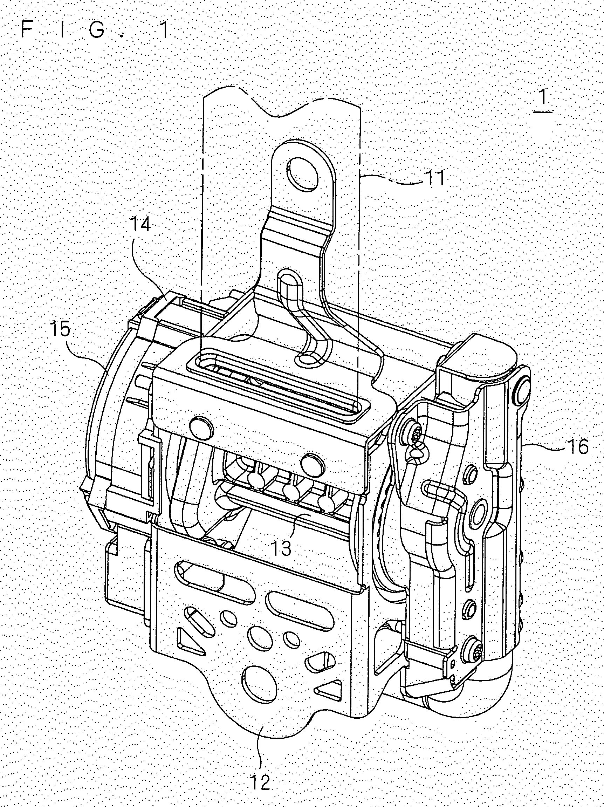

Fig. 1 is a perspective view showing a seatbelt retractor 1 according to this embodiment.

As shown in Fig. 1, the seatbelt retractor (also merely referred to as "retractor") 1 according to this embodiment is applied to a seatbelt device provided to a seat of, for example, a vehicle. In a normal state, the retractor 1 holds webbing 11 being a seat belt to be drawn therefrom and wound therein. The retractor 1 is configured to, in emergency situations (vehicle emergency situations) such as a vehicle crash and sudden deceleration, wind the webbing 11 such that the slack thereof is removed for effectively restraining an occupant and then gradually unwind the webbing 11 such that an impact to be applied to the occupant is mitigated.

The retractor 1 includes a housing unit (housing) 12, a windup drum 13, an emergency lock unit 14, a windup spring unit 15, and a pretensioner unit 16. Here, the windup drum 13 is accommodated in the housing 12, and the emergency lock unit 14, the windup spring unit 15, and the pretensioner unit 16 are provided outside of the housing 12. Here, viewing the positional relationship of components of the retractor 1 with the windup drum 13 being at the center, the configuration is made such that the emergency lock unit 14 and the windup spring unit 15 are provided to one end side (left end side in Fig. 1) of the windup drum 13 and the pretensioned unit 16 is provided to the other end side (right end side in Fig. 1) of the windup drum 13.

### [2. Functions of components and schematic configurations of components]

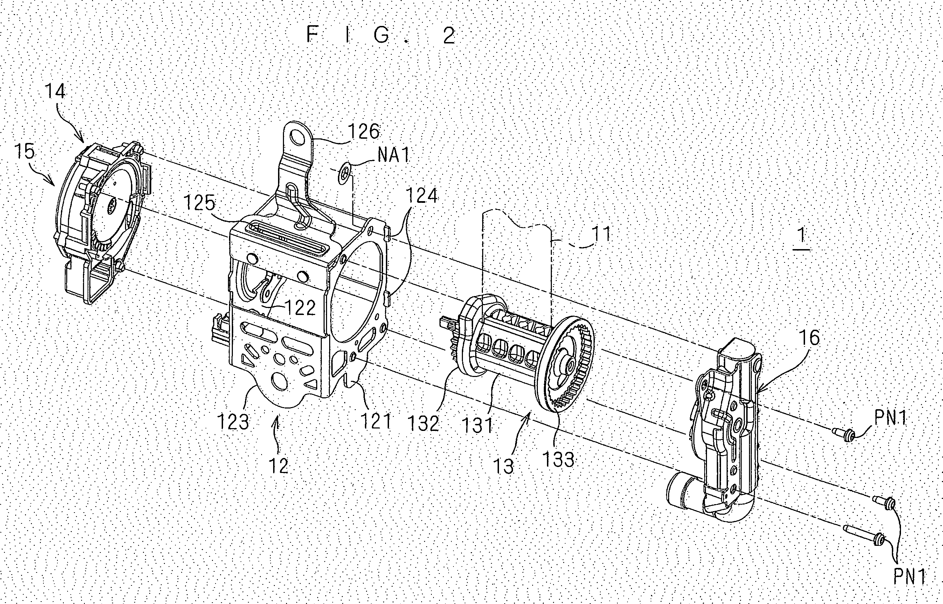

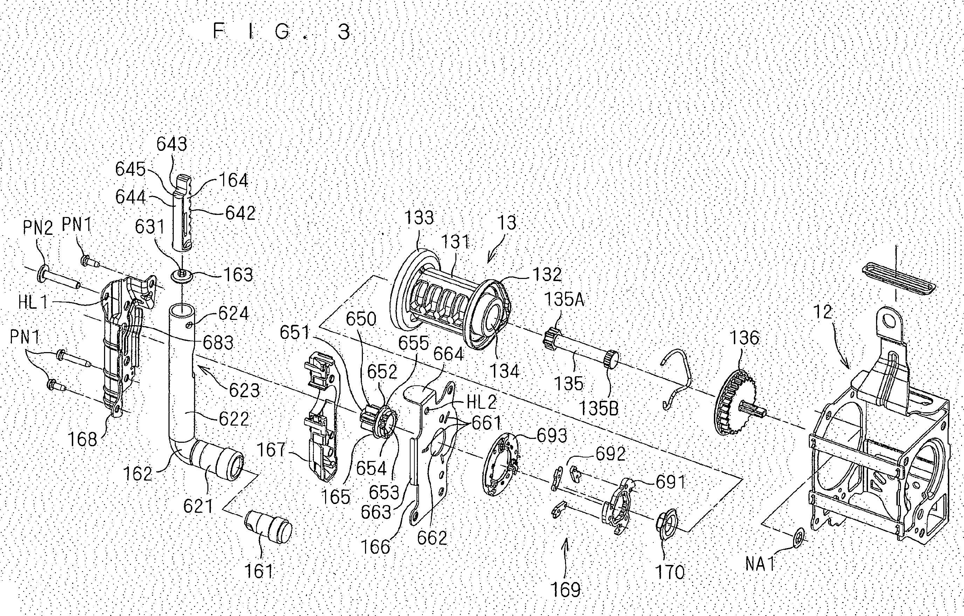

Next, the components of the retractor 1 are described. Fig. 2 is an exploded perspective view showing the seatbelt retractor 1 disassembled in units of components each implementing a predetermined function. Fig. 3 is an exploded perspective view showing the windup drum 13 and pretensioner unit 16 disassembled in further detail.

As shown in Fig. 2, the housing 12 includes a pair of side plate portions 121 and 122 provided to face each other, and connecting plate portions 123 and 124 that connect edges of the side plate portions 121 and 122. In the upper part of the connecting plate portion 123 is provided a member 126 having an opening 125 for drawing the webbing 11 to the outside,

The housing 12 is configured such that the emergency lock unit 14 can be mounted to the exterior of the side plate portion 122 on one side and the pretensioner unit 16 can be mounted to the exterior of the side plate portion 121 on the other side with the windup drum 13 being arranged between the pair of side plate portions 121 and 122.

The windup drum 13 is a member rotatably arranged in the housing 12 while the webbing 11 is wound thereon. Specifically, the windup drum 13 is formed of an aluminum material or the like and includes a drum main body 131 that has an approximately cylindrical shape and flange portions 132. and 133 that are formed at both end parts in an axial direction of the drum main body 131 so as to project radially. The webbing 11 is wound on the drum main body 131 between the flange portions 132 and 133.

Further, as shown in Fig. 3, an axial bore 134 that does not pass through the windup drum 13 is formed along a central axis in the windup drum 13, and a torsion bar 135 is inserted into the axial bore 134. One-end part 135A of the torsion bar 135 is coupled so as not to rotate relative to the windup,drum 13 inside the axial bore 134. Meanwhile, the other-end part 135B of the torsion bar 135 is coupled to a ratchet gear 136 to be connected to the emergency lock unit 14 so as not to rotate relative thereto.

The emergency lock unit 14 (see Figs. 1 and 2) is fixedly provided to the side plate portion 122 of the housing 12, and operates to stop drawing of the webbing 11 via the ratchet gear 136 in response to sudden drawing of the webbing 11 and a sudden acceleration change of a vehicle.

The windup spring unit 15 is provided outside of the emergency lock unit 14 and serves to always rotatively bias the windup drum 13 in the windup direction of the webbing 11 by a biasing force of a spiral spring provided inside of the windup spring unit 15.

The pretensioner unit 16 is fixedly provided to the side plate portion 121 of the housing 12 with self-tapping screws PN1 by directly tightening a cover plate 168 (Fig. 3) and a base plate 166 (Fig. 3) together or tightening the cover plate 168 and the base plates 166 together with a base block 167 (Fig. 3) provided therebetween. The pretensioner unit 16 is a mechanism that causes a gas generating member (gas generator) 161 to work in accordance with a predetermined sensor output in emergency situations such as a vehicle crash such that the windup drum 13 is rotated in the windup direction of the webbing via the flange portion 133 of the windup drum 13 with the use of a pressure of a gas (fluid) from the gas generating member 161.

The pretensioner unit 16 is operated to wind the webbing 11 in emergency situations such as a vehicle crash, so that the slack of the webbing 11 is removed, which enables to effectively restrain the occupant toward the seat.

The pretensioner unit 16 operates irreversibly; that is, only once to wind the webbing 11 in emergency situations such as an actual vehicle crash. In other words, after the actual vehicle crash, a mechanism for tightening the webbing 11 again is not required, so that the irreversible pretensioner unit 16 tightens the webbing 11 relatively firmly.

### [3. Detailed configuration of pretensioner unit 16]

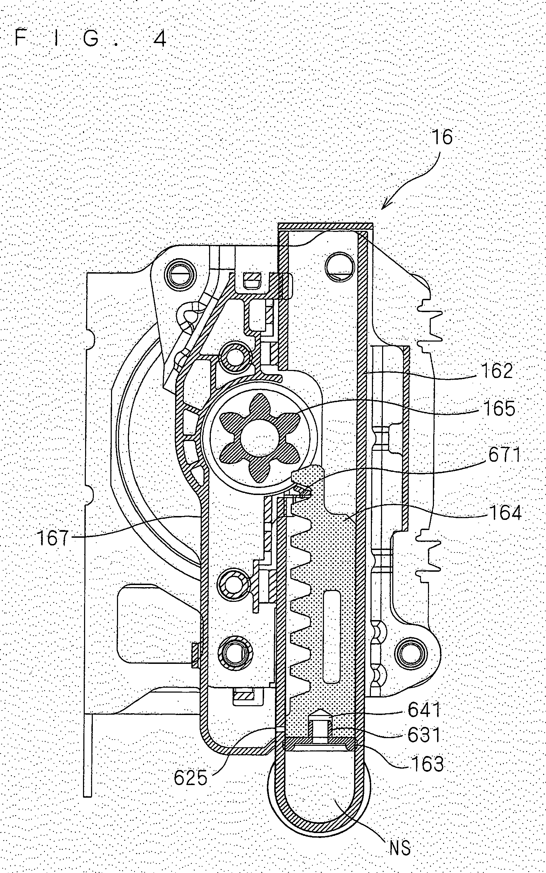

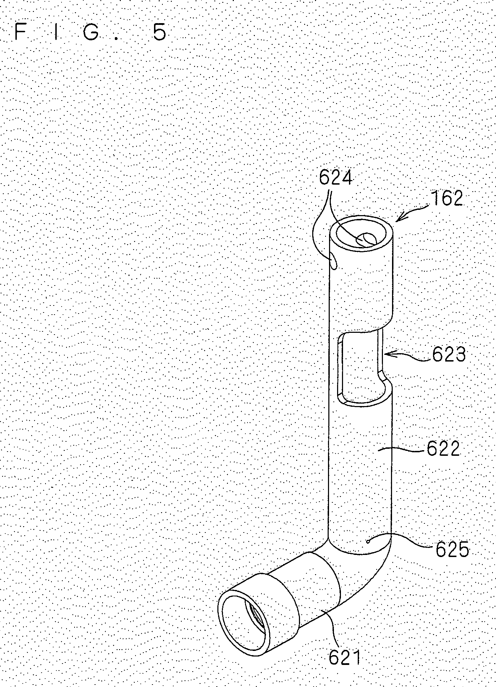

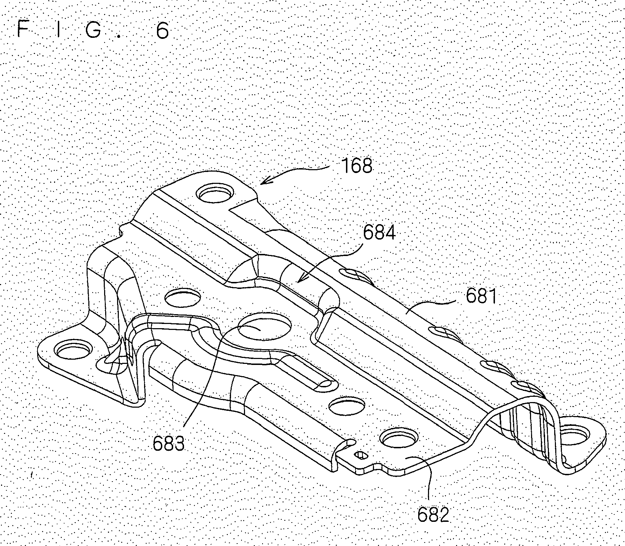

Next, the configuration of the pretensioner unit 16 is described in detail. Fig. 4 is a vertical cross-sectional view of the pretensioner unit 16 in a standby state. Fig. 5 is a perspective view of a pipe cylinder 162 that forms the pretensioner unit 16. Fig. 6 is a perspective view of the cover plate 168.

As shown in Fig. 3, the pretensioner unit 16 includes the gas generating member 161, the pipe cylinder 162, a seal plate 163 and a piston 164 that move through the pipe cylinder 162 upon receipt of the gas pressure of the gas generating member 161, a pinion gear 165 that meshes (engages) with a rack 642 formed in the piston 164 and rotates, the base plate 166 to which the pipe cylinder 162 is mounted, the base block (block member) 167 that is formed of a synthetic resin such as polyacetal and is disposed to the base plate 166 so as to cover the side surface of the pinion gear 165, the cover plate 168 that covers the pipe cylinder 162, base block 167, and the like disposed in the base plate 166, and a clutch mechanism 169 disposed on the outer surface of the base plate 166.

The pinion gear 165 is formed of, for example, a steel member and has an approximately cylindrical shape, and a pinion gear portion 650 that meshes with the rack 642 formed in the piston 164 is formed in the outer peripheral part thereof. On the cover plate 168 side in the axial direction of the pinion gear portion 650 is provided a support portion 651 having a cylindrical shape that is extended outwardly. The support portion 651 is fitted into a support hole (opening) 683 of the cover plate 168 as described below.

Meanwhile, a flange portion 652 that projects radially is formed at the end part on the base plate 166 side in the axial direction of the pinion gear portion 650. Further, a boss portion 654 including a bearing portion 653 into which the bearing 170 is fitted is formed outwardly from the flange portion 652. Three splines are formed every central angle of about 120 degrees on the outer peripheral surface at the distal end part of the boss portion 654.

The clutch mechanism 169 includes a pawl base 691 formed of, for example, a steel material, three clutch pawls 692 formed of, for example, a steel material, and an approximately toroidal pawl guide 693 that is formed of a synthetic resin such as polyacetal and sandwiches the clutch pawls 692 together with the pawl base 691.

Three spline grooves into which the splines formed in the boss portion 654 of the pinion gear 165 are press-fitted are formed every central angle of about 120 degrees on the inner peripheral surface of the pawl base 691. The inner peripheral diameter of the pawl guide 693 is formed to be larger than spline groove of the pawl base 691. Three positioning projections (not shown) are provided in a protruding manner at equal angles in the side surface part on the base plate 166 side of the pawl guide 693.

In configuring the retractor 1, the positioning projections that are provided in a protruding manner in the side surface part on the base plate 166 side of the pawl guide 693 of the clutch mechanism 169 are fitted into positioning holes 661 of the base plate 166, so that the clutch mechanism 169 is arranged on the surface of the side plate portion. 121 side of the housing 12 in the base plate 166. Then, the boss portion 654 of the pinion gear 165 is fitted into a through hole (opening) 662 formed at the approximately center part of the base plate 166, and then, the splines formed in the boss portion 654 are respectively press-fitted into and fixed to the spline grooves of the pawl base 691 that forms the clutch mechanism 169 As a result, the clutch mechanism 169 and the pinion gear 165 are disposed and fixed to the base plate 166, and the pinion gear portion 650 of the pinion gear 165 is always positioned and fixed at the position shown in Fig. 4.

The inner diameter of the through hole 662 formed at the approximately center part of the base plate 166 is formed into such a diameter as to support the outer diameter of a proximal end part 655 of the boss portion 654 of the pinion gear 165 so that one-end side of the pinion gear 165 can be rotatably supported.

The pipe cylinder (cylinder) 162 (see Figs. 3 and 5) is formed by bending a tubular steel pipe material or the like into an approximately L-like shape.

Specifically, a holding portion 621 having an approximately cylindrical shape is formed on the one-end side (lower bent part in Fig. 5) of the pipe cylinder 162, which is configured to hold the gas generating member 161. The gas generating member 161 contains explosives and is configured to ignite the explosives in response to an ignition signal from a controller (not shown) to generate a gas by burning of a gas-generating agent. The gas generating member 161 functions as a drive mechanism that fills a space (interior space) NS (see Fig. 4) formed between the inner wall of the pipe cylinder 162 and the bottom of the piston 164 arranged in the pipe cylinder 162 with a gas to drive the piston 164 by the pressure of the gas.

On the other-end side (upper bent part in Fig. 5) of the pipe cylinder 162, meanwhile, is provided a piston holding portion 622. The piston holding portion 622 has a tubular shape with an approximately circular cross-section, and a notch 623 is formed in a part thereof from the middle to the upper end of the tube. Movement of the piston 164 causes the rack 642 of the piston 164 to appear from the notch 623 In a case where the pipe cylinder 162 is disposed on the base plate 166, the pinion gear portion 650 of the pinion gear 165 is located in the notch 623 so as to mesh with the rack 642.

The piston holding portion 622 of the pipe cylinder 162 is formed to have an approximately circular cross-sectional shape as described above, which enables to reduce a manufacturing cost of the pipe cylinder 162 by a larger amount compared with a case in which the piston holding portion 622 is formed to have a rectangular cross-section.

On the upper-end part of the piston holding portion 622 are formed a pair of through holes 624 that face each other, through which a stopper pin PN2 can be inserted. The stopper pin PN2 mounts the pretensioner unit 16 to the housing 12 and serves to prevent the piston 164 from slipping and prevent the pipe cylinder 162 from slipping and rotating. The stopper pin PN2 is inserted into a through hole HL1 of the cover plate 168, a through hole HL2 of the base plate 166, and the pair of through holes 624 of the pipe cylinder 162, and tightens together the cover plate 168, the pipe cylinder 162, and the base plate 166 and secures them to the housing 12 with a push nut NA1.

The seal plate (also referred to as "seal member") 163 is formed of, for example, a rubber material into an approximately circular plate shape that can be inserted from the upper-end side of the piston holding portion 622. The seal plate 163 serves to seal a part between the piston 164 and the inner wall of the pipe cylinder 162. On a center part of the seal plate 163 is provided a projection 631.

The piston 164 is formed of, for example, a steel material and has a long shape as a whole. The rack 642 that meshes with the pinion gear portion 650 of the pinion gear 165 is formed on the side surface of the piston 164. On a rear surface at the distal-end part of the rack 642 is formed a step 643 that can abut against the stopper screw PN2. In the lower-end part of the piston 164 is formed a fitting groove 641 (see Fig. 4) into which the projection 631 of the seal plate 163 can be fitted.

The surface on the side opposite to the side surface on which the rack 642 is formed is configured as a contact surface 644 that can come into contact with the inner wall of the pipe cylinder 162. The contact surface 644 has a shape corresponding to the inner wall surface of the pipe cylinder 162 such that the piston 164 can slide smoothly through the pipe cylinder 162. In other words, the cross-section on the contact surface side of the piston 164 is formed into an arc shape.

The part on the rear surface side of the rack 642, which can come into contact with the inner wall of the pipe cylinder 162, is also referred to as a "contact portion". This embodiment has illustrated the contact surface 644 as the contact portion, which may have other shape unless the contact portion hinders the piston 164 from moving smoothly. For example, a hemispherical projection may be provided on the rear surface side of the rack 642 to function as the contact portion.

The piston 164 having the above-mentioned shape is press-fitted inwardly from the upper end of the piston holding portion 622 while the projection 631 of the seal plate 163 is fitted into the fitting groove 641 of the piston 164, where the seal plate 163 is on the inward side of the piston holding portion 622.

As shown in Fig. 4, the press-fitted piston 164 is arranged such that the distal end of the rack 642 does not mesh with the pinion gear portion 650 on the inward side of the piston holding portion 622. In the non-meshing state above, the piston 164 is positioned and restricted from rotating by a positioning rib 671 that is provided in the base block 167 and, when the pretensioner unit 16 operates, is sheared by the piston 164 (see Fig. 4).

As shown in Fig. 6, the cover plate 168 includes a cylinder coating portion 681 that covers the side surface of the pipe cylinder 162 along the shape of this side surface, and a plane-like flat coating portion 682 that covers the pinion gear 165 and the base block 167.

The cylinder coating portion 681 has such a round shape as to extend along the side surface of the tubular pipe cylinder 162 for abutting against and coat this side surface. A drawn portion 684 obtained by recessing a part of the cylinder coating portion 681 is formed in the cylinder coating portion 681.

The flat coating portion 682 is formed to be continuous with the cylinder coating portion 681 and has the support hole 683 into which the support portion 651 of the pinion gear 165 is fitted. The part extending from the support hole 683 to the drawn portion 684 of the cylinder coating portion 681 is formed of a flat plate flush with the flat coating portion 682.

The cover plate 168 having the above-mentioned structure is arranged to cover the pipe cylinder 162 with the cylinder coating portion 681 while causing the support portion 651 of the pinion gear 165 to be fitted into the support hole 683, and is fixedly provided to the housing 12 together with the base plate 166 with the pins PN1.

In the state in which the cover plate 168 is fixedly provided to the housing 12, the proximal end part 655 and the support portion 651 of the boss portion 654 that are formed in both end parts of the pinion gear 165 are fitted into the through hole 662 of the base plate 166 and the support hole 683 of the cover plate 168, respectively. As a result, the pinion gear 165 is rotatably supported by the base plate 166 and the cover plate 168.

In the state in which the cover plate 168 is fixedly provided to the housing 12, the pipe cylinder 162 is sandwiched between the base plate 166 and the cover plate 168 and is also sandwiched between the base block 167 and the cover plate 168.

In the state in which the cover plate 168 is fixedly provided to the housing 12, the drawn portion 684 of the cylinder coating portion 681 is fitted into the notch 623 of the pipe cylinder 162.

In the pretensioner unit 16, in the state in which the cover plate 168 is caused to contact with the base plate 166, an end part 663 of the base plate 166 is crimped, so that the force of the cover plate 168 to be fixed to the base plate 166 is increased. Accordingly, the number of components such as pins and screws for use in fixation can be reduced.

In the state in which the cover plate 168 is fixedly provided to the housing 12, the upper-end-side opening of the piston holding portion 622 of the pipe cylinder 162 is covered with a cover portion 664 extended approximately perpendicularly from the upper-end part of the base plate 166.

### [4. Operation of pretensioner unit 16]

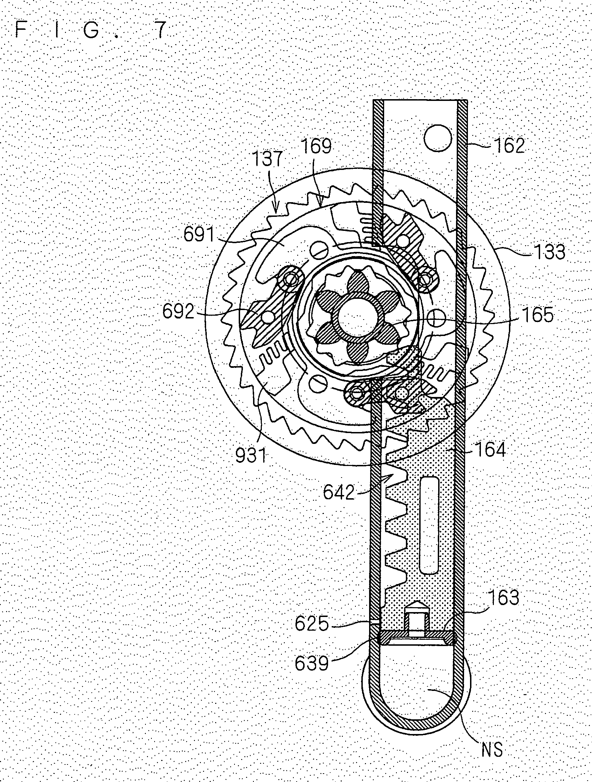

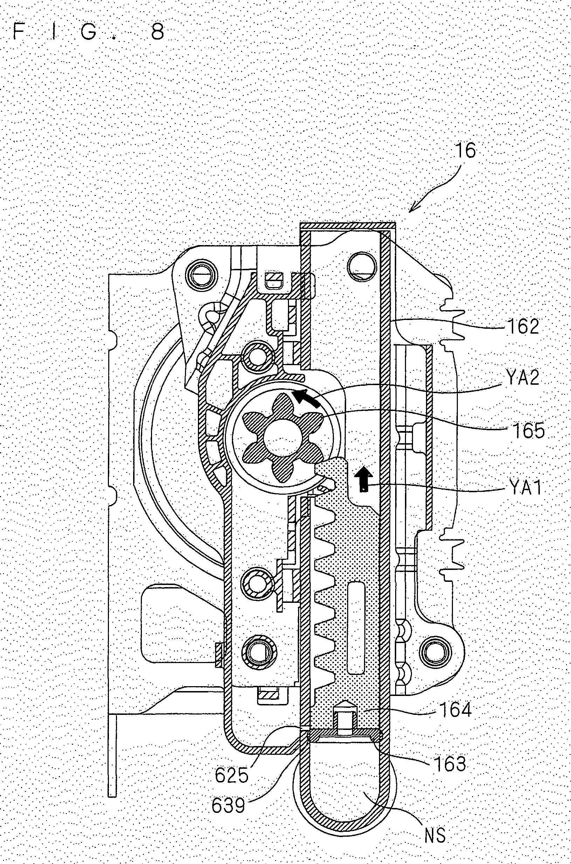

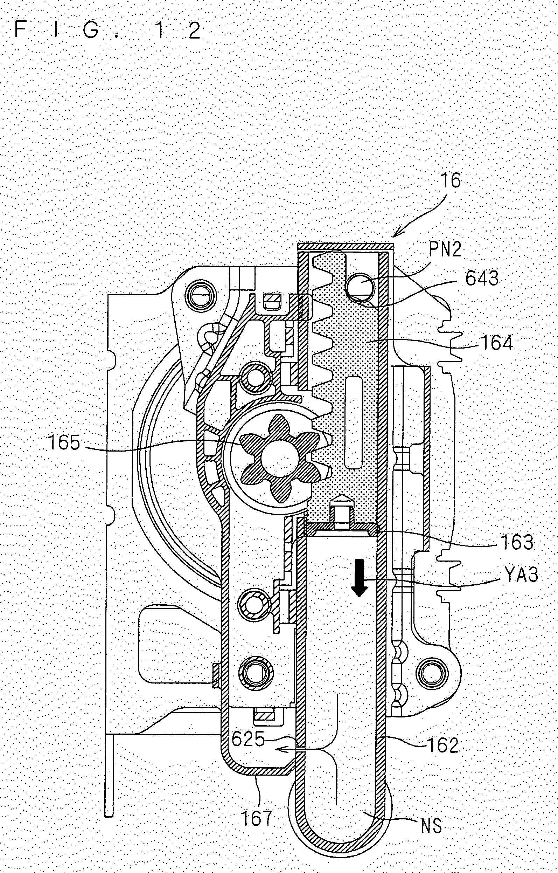

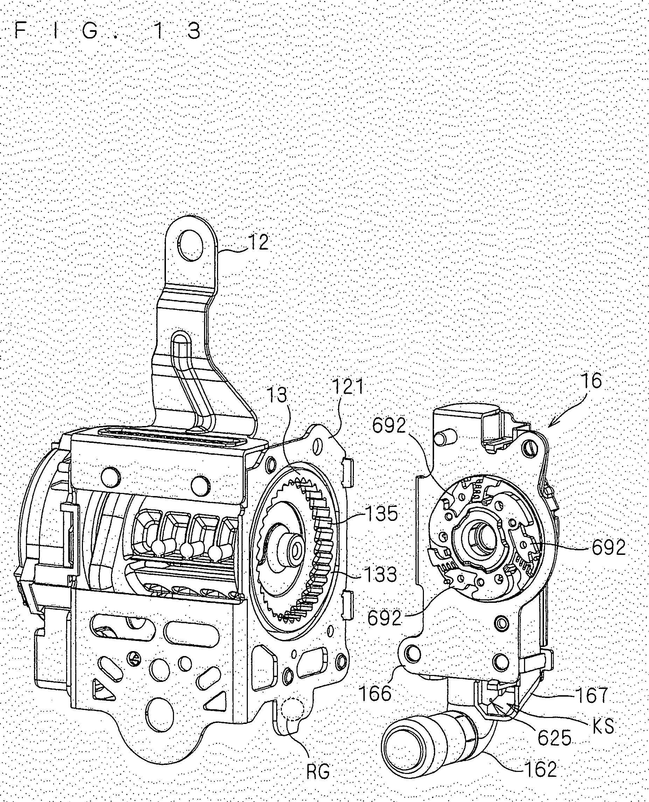

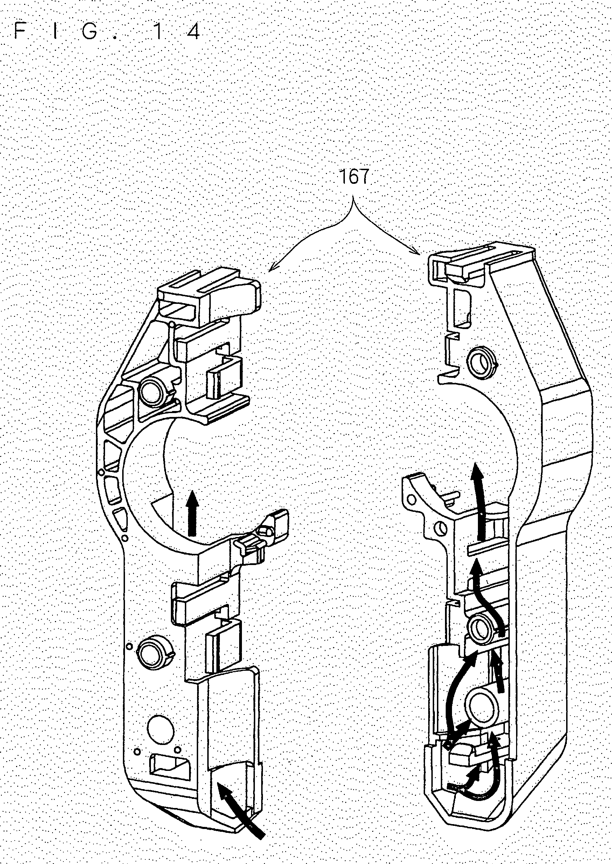

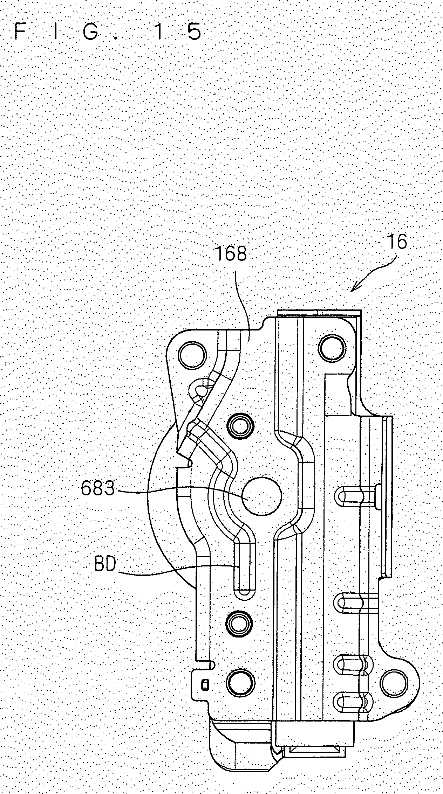

Next, the operation of winding the webbing 11 by the pretensioner unit 16 during a vehicle crash, namely the operation of the pretensioner unit 16 is described. Figs. 7 and 9 to 11 are views for describing the operation of the pretensioner unit 16. Figs. 7 and 9 to 11 show the meshing state of the rack 642 provided in the piston 164 and the pinion gear 165, and show engaged state of the clutch pawls 692 of the clutch mechanism 169 and the clutch gear 137 provided in the windup drum 13. Figs. 8 and 12 are vertical cross-sectional views of the pretensioner unit 16. Fig. 13 is a perspective view showing the pretensioner unit 16 viewed from the surface side on which the pretensioner unit 16 is mounted to the housing unit 12. Fig. 14 is a view showing a flow of an exhaust gas passing through the base block 167. Fig. 15 is an outline view showing the pretensioner unit 16 viewed from the cover plate 168 side.

As shown in Fig. 4, in the standby state (initial state) before the pretensioner unit 16 operates, the piston 164 is fixed at a certain position such that the rack 642 of the piston 164 and the pinion gear 165 do not mesh with each other. In this standby state, as shown in Fig. 7, the clutch pawls 692 are accommodated in the clutch mechanism 169.

Upon generation of a gas from the gas generating member 161 in a standby state, the seal plate 163 is pressed by a pressure of the generated gas. Upon pressing of the seal plate 163, as shown in Fig. 8, the piston 164 moves toward the upper end (in the direction of an arrow YA1 in Fig. 8) of the piston holding portion 622, and the pinion gear 165 meshing with the rack 642 rotates in the direction of an arrow YA2.

The pinion gear 165 rotates in the direction of the arrow YA2, so that the pawl base 691 press-fitted and fixed by the pinion gear 165 rotates in association therewith.

Here, in the clutch mechanism 169, the pawl base 691 is allowed to rotate but the pawl guide 693 cannot rotate because the positioning projections provided to the pawl guide 693 are engaged with the base plate 166. For this reason, at the initial stage of the operation of the pretensioner unit 16, the pawl base 691 rotates relative to the pawl guide 693 that does not rotate.

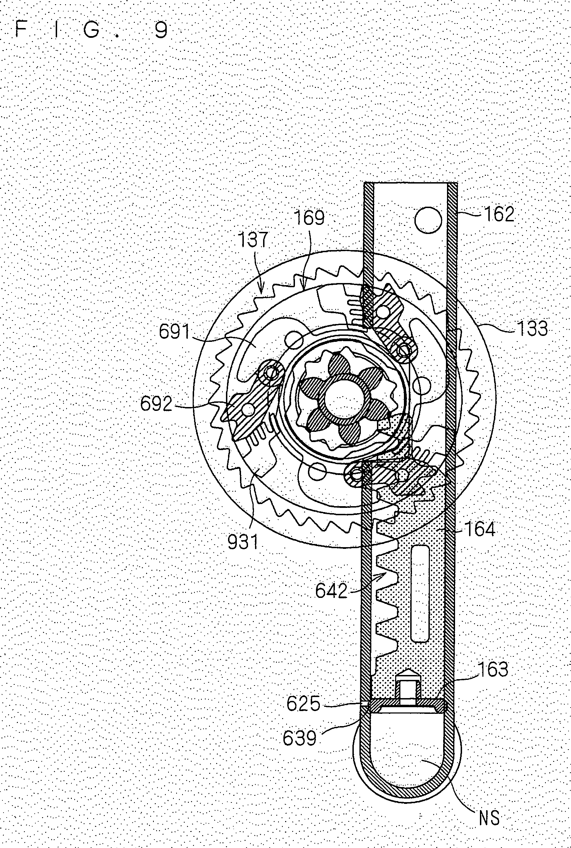

Along with the rotational movement of the pawl base 691, the clutch pawls 692 pressed by the pawl base 691 also rotate in the same direction. Accordingly, as shown in Fig. 9, the clutch pawls 692 that have moved through the rotation come into contact with a guide portion 931 of the pawl guide 693 and starts projecting toward the outer diameter.

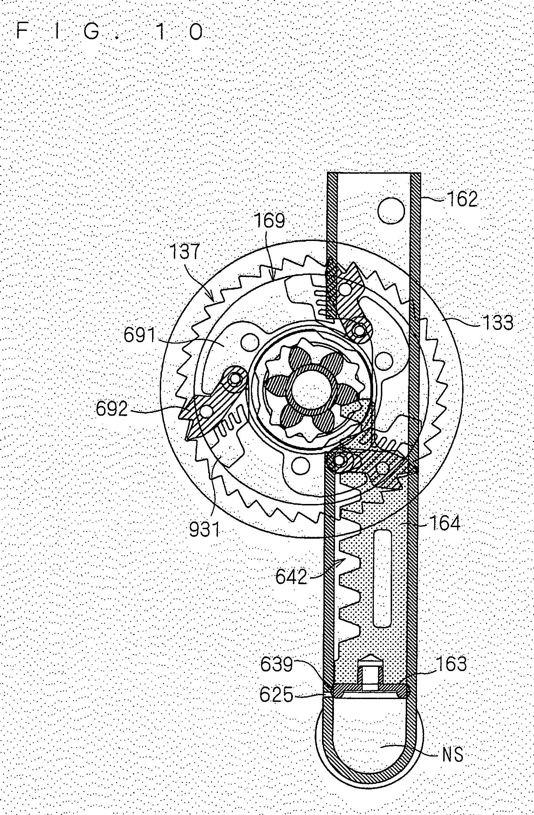

The pawl base 691 rotates further, so that as shown in Fig. 10, the clutch pawls 692 that have been further pressed by the pawl base 691 are guided in a sliding manner toward the outer diameter by the guide portion 931 to project completely toward the outer diameter. Then, in the flange portion 133 of the windup drum 13, the projected clutch pawls 692 impacts the clutch gear 137 engraved toward the axis (see Fig. 10).

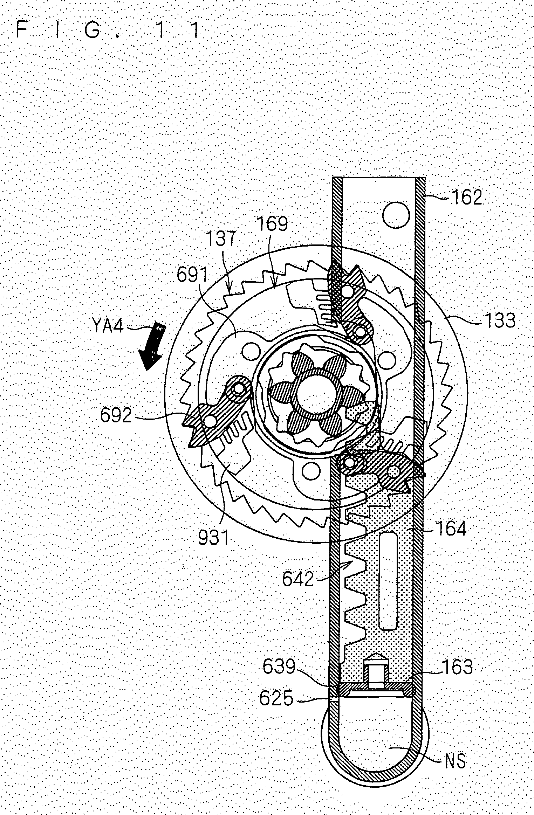

A drive force is being applied to the pawl guide 693 after the clutch pawls 692 coming into contact with the clutch gear 137, so that the clutch pawls 692 mesh with the clutch gear 137, whereby the clutch pawls 692 and the clutch gear 137 are engaged with each other (see Fig. 11). After the engagement of the clutch pawls 692 and the clutch gear 137, a drive-force is further applied to the pawl guide 693 and, when the pawl guide 693 can no longer withstand the drive force, the positioning projections of the pawl guide 693 fitted into the positioning hole 661 of the base plate 166 are broken. After that, the clutch mechanism 169 operates in an integrated manner and causes the windup drum 13 to rotate in the direction (direction of an arrow YA4 in Fig. 11) of winding the webbing 11 via the clutch pawls 692 engaged with the clutch gear 137, whereby the webbing 11 is wound. In this manner, the clutch mechanism 169 allows the windup drum 13 and the pinion gear 165 to rotate in association with each other during the operation of the pretensioner unit 16.

Then, in a case where the piston 164 moves to the uppermost end of the piston holding portion 622 by a pressure of a gas generated in the gas generating member 161, the step 643 of the piston 164 abuts against the stopper screw PN2 inserted into the through holes 624, whereby the piston 164 is stopped (see Fig. 12).

In a case where the webbing 11 is unwound again after the operation of the pretensioner unit 16, the pinion gear 165 reversely rotates, whereby the piston 164 moves downward (in the direction of an arrow YA3 in Fig. 12). On this occasion, the pipe cylinder 162 is degassed from a through hole (also referred to as "gas release hole") 625 provided on the side surface of the pipe cylinder 162, which allows the piston 164 to smoothly move downward.

In the pretensioner unit 16 that operates as described above, the gas release hole 625 for releasing the gas in the pipe cylinder 162 to the outside (exterior space) is provided at the position at which the output of the gas generating member 161 can be used effectively for driving the piston 164.

Specifically, as shown in Fig. 7, the gas release hole 625 is provided above a portion (also referred to as "seal contact portions") 639 of the seal plate 163, which comes into contact with the inner wall (inner peripheral surface) of the pipe cylinder 162, in the standby state before the pretensioner unit 16 operates. As described above, the position of the gas release hole 625 in the axial direction of the pipe cylinder 162 is located above the position of the seal contact portion 639 of the seal plate 163 in the standby state, so that at the initial position of the piston 164 before gas generation, the interior space NS and the exterior space in the pipe cylinder 162 enter a state (non-continuous state) in which they are not continuous with each other through the gas release hole 625.

In the pretensioner unit 16 of this embodiment, therefore, the interior space NS of the pipe cylinder 162 can be kept sealed at the time when the pretensioner unit 16 starts operating, which enables to effectively use the gas pressure for the traveling force of the piston 164.

In the standby state, the interior space NS of the pipe cylinder 162 can be kept sealed, which prevents the intrusion of foreign matters such as dirt and dust into the interior space NS from the outside, eliminating the need for providing a member for preventing the intrusion of foreign maters. Further, as shown in Fig. 4, in the standby state, the gas release hole 625 is closed by the piston 164 from the inside of the pipe cylinder. This prevents the intrusion of dirt, dust, and the like into the entire pipe cylinder 162 from the outside through the gas release hole 625, enhancing an effect of preventing the intrusion of foreign matters.

Still further, in the axial direction of the pipe cylinder 162, the gas release hole 625 is provided at such a position as to exhaust a gas to be generated after a lapse of a predetermined period from the start of the operation of the pretensioner unit 16.

Specifically, in the pretensioner unit 16, the clutch pawls 692 are engaged with the clutch gear 137 of the windup drum 13 after the pretensioner unit 16 starts operating. Then, the power generated by the operation of the pretensioner unit 16 is transmitted to the windup drum 13, so that as shown in Fig. 11, the windup drum 13 starts rotating in the direction of the arrow YA4.

In the pretensioner unit 16 that undergoes each operation step as described above, the gas release hole 625 is provided, in the axial direction of the pipe cylinder 162, below the position of the seal contact portion 639 of the seal plate 163 at a time when the transmission of the power generated in the pretensioner unit 16 to the windup drum 13 starts.

The provision of the gas release hole 625 at such a position allows, in the pretensioner unit 16, the inside of the pipe cylinder 162 to be kept sealed until the clutch pawls 692 are engaged with the clutch gear 137 of the windup drum 13 such that the power of the pretensioner unit 16 is applied to the windup drum 13 after the start of the operation. In other words, in the pretensioner unit 16, the interior space NS of the pipe cylinder 162 is kept sealed in any of the standby state (Fig. 7), the operating state (Fig. 9) when the rack 642 that has been moved upward by a gas pressure first meshes with the pinion gear 165, and the operating state (Fig. 10) when the clutch pawls 692 come into contact with the clutch gear 137.

Meanwhile, after the clutch pawls 692 are engaged with the clutch gear 137 of the windup drum 13 so that the transmission of the power by the pretensioner unit 16 to the windup drum 13 is started, as shown in Fig. 11, the interior space NS of the pipe cylinder 162 enters such a state (continuous state) in which it is continuous with the outside through the gas release hole 625. Accordingly, a generated gas can be discharged to the outside of the pipe cylinder 162 from the gas release hole 625 when the rotation of the windup drum 13 is started.

As described above, in the pretensioner unit 16, the gas release hole 625 is provided at a position at which the interior space NS of the pipe cylinder 162 that has changed in accordance with the movement of the piston 164 after gas generation and the outside enter the continuous state where they are continuous with each other through the gas release hole 625. This results in a state in which the gas in the pipe cylinder 162 can be discharged to the outside after the operation of the pretensioner unit 16, which prevents the gas pressure in the pipe cylinder 162 from rising excessively. Consequently, the pretensioner unit 16 can be operated safely. Besides, the piston 164 can be moved smoothly when the webbing 11 is unwound again after the operation of the pretensioner unit 16.

The gas in the pipe cylinder 162 can be discharged to the outside through the gas release hole 625 when the power generated by the operation of the pretensioner unit 16 is first applied to the windup drum 13, whereby the pretensioner unit 16 can be operated more safely. Specifically, the piston 164 cannot move in such a situation that the webbing 11 is tight and the windup drum 13 does not rotate in the windup direction when the pretensioner unit 16 operates, so that the gas pressure in the pipe cylinder 162 increases. With the configuration in which the gas in the pipe cylinder 162 can be discharged to the outside through the gas release hole 625 when the force in the windup direction to be generated by the operation of the pretensioner unit 16 is first applied to the windup drum 13, therefore, the pretensioner unit 16 can be operated safely without an excessive load being applied to the pretensioner unit 16 due to a gas pressure also in a situation in which the webbing 11 is tight and the windup drum 13 does not rotate in the windup direction.

A plate-like seal member such as the seal plate 163 of this embodiment is arranged on the interior-space-side surface at the lower end of the piston 164, which minimizes as much as possible the deformation of the seal member due to the gas pressure generated by the gas generating member 161 during the operation of the pretensioner unit 16, suppressing misalignment of the seal contact portion 639 with respect to the piston 164. Accordingly, a misalignment of the piston 164 with respect to the pipe cylinder 162 in the axial direction of the pipe cylinder 162 can be suppressed, which occurs in such a state that the gas in the pipe cylinder 162 can be discharged to the outside through the gas release hole 625. This stably enables to effectively use the output of the gas generating member 161 and safely operate the pretensioner unit 16.

As to the pretensioner unit 16 including the clutch mechanism 169 as in this embodiment, the point of time at which the power of the pretensioner unit 16 is first applied to the windup drum 13 can be expressed as the point of time at which the clutch pawls 692 are engaged with the clutch gear 137 of the windup drum 13. As to the pretensioner unit including no clutch mechanism, however, there is no latter point of time. Therefore, as to the pretensioner unit including no clutch mechanism, the point of time at which the continuous state is obtained so that the gas in the pipe cylinder 162 can be discharged to the outside is expressed as the point of time at which the power of the pretensioner unit is first applied to the windup drum.

The position of the gas release hole 625 in the circumferential direction on the side surface of the pipe cylinder 162 is such a position that the exhaust gas from the gas release hole 625 can be released to the space (specific space) defined by the side surface of the pipe cylinder 162 and the inner wall of the base block 167 arranged adjacent to a part of the side surface of the pipe cylinder 162. The above-mentioned configuration in which an exhaust gas can be released to the specific space surrounded can reduce a risk that a high-temperature exhaust gas will leak out of the pretensioner unit 16.

The exhaust gas to be discharged from the gas release hole 625 is a high-temperature gas involving flames. Accordingly, the pretensioner unit 16 is configured such that an exhaust gas discharged from the gas release hole 625 first impacts a heat-resisting member made of for example, metal.

Specifically, as shown in Fig. 13, the specific space includes an opened portion KS that is not surrounded by the inner wall of the base block 167 and the side surface of the pipe cylinder 162. In the state in which the retractor 1 is assembled, the metal side plate portion 121 of the housing 12 is arranged in the opened portion KS. The gas release hole 625 is provided to allow an exhaust gas to first impact the side plate portion 121 arranged in the opened portion KS. More specifically, the position of the gas release hole 625 is adjusted in the circumferential direction on the side surface of the pipe cylinder 162 such that the exhaust gas discharged from the gas release hole 625 directly impacts a gas receiving portion RG of the side plate portion 121. In addition to the positional adjustment in the circumferential direction of the gas release hole 625, the shape of the gas release hole 625 is adjusted such that the exhaust gas discharged from the gas release hole 625 directly impacts the gas receiving portion RG of the side plate portion 121.

With the above-mentioned configuration in which the exhaust gas discharged from the gas release hole 625 first impacts the metal side plate portion 121, the temperature of the exhaust gas can be lowered, preventing a deformation of the base block 167 made of a synthetic resin. While a part of the side plate portion 121 of the housing 12 is used here as a heat-resisting member made of, for example, metal. Alternatively, the base plate 166 may be deformed and a part of the base plate 166 may be used as a heat-resisting member in place of the side plate portion 121. Still alternatively, a member made of metal, ceramic, of the like may be separately prepared as a heat-resisting member and the member separated prepared may be mounted to the base block 167.

As shown in Fig. 14, the base block 167 is provided with a passage (also referred to as "gas passage") that guides an exhaust gas from the specific space. The gas passage is configured in a complex manner, which causes the exhaust gas discharged from the gas release hole 625 to move through the gas passage in the base block 167 in an intricate manner (see arrows in Fig. 14). The travel passage of the exhaust gas is configured intricate such that the exhaust gas impacts obstacles, enabling to put out a fire of the exhaust gas involving flames in the base block 167, which prevents the escape of sparks to the outside of the pretensioner unit 16.

As shown in Fig. 15, in the cover plate 168 of this embodiment is provided a bead (reinforced bead) BD being a linear projection extending from the part of the cover plate 168 around the support hole 683 in the direction along an inlet part of the exhaust gas from the pipe cylinder 162 in the base block 167.

As described above, the bead BD is provided at such a position as to cover the part of the base block 167 around the gas outlet, specifically, at least one of the specific space and gas passage in the cover plate 168. This increases the strength of the cover plate 168, suppressing the deformation of the cover plate 168 by an exhaust gas.

As described above, the seatbelt retractor 1 of this embodiment includes the windup drum 13 that winds the webbing 11, and the pretensioner unit 16 that causes the windup drum 13 to rotate in the windup direction of the webbing 11. The pretensioner unit 16 includes the pinion gear 165 capable of rotating in association with the windup drum 13, the piston 164 that includes the rack 642 for meshing with the pinion gear 165 and causes the windup drum 13 to rotate in the windup direction through the pinion gear 165, the tubular pipe cylinder 162 that movably holds the piston 164, and the gas generating member 161 that fills the interior space NS of the cylinder with a gas generated to drive the piston 164 by a pressure of the gas. The pipe cylinder 162 includes, on the tubular side surface, the gas release hole 625 for releasing the gas to the outside of the pipe cylinder 162. The gas release hole 625 is provided to be located: in the initial position of the piston 164 before gas generation, at the position at which the interior space NS of the pipe cylinder 162 and the outside thereof are not continuous with each other through the gas release hole 625; and after gas generation, at the position at which the interior space NS of the pipe cylinder 162 that has changed upon moving of the piston 164 and the outside thereof are continuous with each other through the gas release hole 625.

According to the seatbelt retractor 1 described above, the interior space NS of the pipe cylinder 162 is kept sealed at the point of time at which the pretensioner unit 16 starts operating, allowing effective use of the pressure of the generated gas for the traveling force of the piston 164. In addition, the gas in the pipe cylinder 162 can be discharged to the outside after the operation of the pretensioner unit 16, preventing the gas pressure in the pipe cylinder 162 from rising excessively, which enables the safe operation of the pretensioner unit 16.

### <Modifications>

While the embodiment of the present invention has been described above, the present invention is not limited to the description above.

The pipe cylinder 162 having an approximately circular cross-section is used in the embodiment above, which is not limited thereto. For example, a pipe cylinder having an approximately rectangular cross-section may be used.

While the present invention has been described above in detail, the foregoing description is in all aspects illustrative, and the present invention is not limited thereto. That is, numerous modifications and variations can be devised in the described aspects without departing from the scope of the invention.

### Description of References

- 1: seatbelt retractor (retractor)
- 11: webbing
- 12: housing unit (housing)
- 13: windup drum
- 16: pretensioner unit
- 161: gas generating member
- 162: pipe cylinder
- 164: piston
- 165: pinion gear
- 166: base plate
- 168: cover plate
- 625: gas release hole (through hole)
- 642: rack
- NS: interior space
- BD: bead

## Claims

1. A seatbelt retractor (1) comprising:
a windup drum (13) that winds webbing (11); and
a pretensioner unit (16) that causes said windup drum (13) to rotate in a windup direction (YA4) of said webbing (11), wherein
said pretensioner unit (16) includes:
a pinion gear (165) configured to rotate in association with said windup drum (13);
a piston (164) that includes a rack (642) for meshing with said pinion gear (165) and causes said windup drum (13) to rotate in said windup direction (YA4) through said pinion gear (165);
a tubular cylinder (162) that movably holds said piston (164); and
a gas generating member (161) that fills an interior space (NS) of said tubular cylinder (162) with a gas generated to drive said piston (164) by a pressure of said gas;
said tubular cylinder (162) includes, on a side surface thereof, a through hole (625) for releasing said gas to an outside of said tubular cylinder (162),
said through hole (625) Is provided to be located:
in an initial position of said piston (164) before gas generation, at a position at which the interior space (NS) of said tubular cylinder (162) and said outside are not continuous with each other through said through hole (625); and
after gas generation, at a position at which the interior space (NS) of said tubular cylinder (162) that has changed upon moving of said piston (164) and said outside enter a continuous state to be continuous with each together through said through hole (625), **characterized in that**
the seatbelt retractor (1) further comprises a block member (167) arranged adjacent to a part of the side surface of said tubular cylinder (162), and
in a circumferential direction of the side surface of said tubular cylinder (162), said through hole (625) is provided at such a position that said gas is released as an exhaust gas to a specific space (KS) defined by an inner wall of said block member (167) and said part of the side surface of said tubular cylinder (162).

2. The seatbelt retractor (1) according to claim 1, wherein said through hole (625) is provided at a position at which said continuous state is obtained upon a force in said windup direction (YA4) being first applied to said windup drum (13) by the operation of said pretensioner unit (16).

3. The seatbelt retractor (1) according to claim 1 or 2, wherein:
said pretensioner unit (16) further includes a clutch mechanism (169) that causes a pawl (692) to project upon rotation of said pinion gear (165) and causes said pawl (692) to be engaged with a gear (137) of said windup drum (13), to thereby rotate said windup drum (13) and said pinion gear (165) in association with each other, and
said through hole (625) is provided at a position at which said continuous state is obtained upon said pawl (692) being engaged with the gear (137) of said windup drum (13).

4. The seatbelt retractor (1) according to any one of claims 1 to 3, wherein a seal member (163) is provided on a surface of said interior space (NS) side of said piston (164).

5. The seatbelt retractor (1) according to any one of claims 1 to 4, wherein:
said specific space (KS) includes an opened portion (KS) that is not surrounded by the inner wall of said block member (167) and said part of the side surface of said tubular cylinder (162),
in an assembled state, said seatbelt retractor (1) is configured such that a heat-resisting member is located at said opened portion (KS), and
said through hole (625) is provided such that in said specific space (KS), said exhaust gas released from said through hole (625) first impacts said heat-resisting member located at said opened portion (KS).

6. The seatbelt retractor (1) according to any one of claims 1 to 5, wherein:
said block member (167) includes a passage that guides said exhaust gas from said specific space (KS), and
said passage is configured in a complex manner in said block member (167).

7. The seatbelt retractor (1) according to claim 6, wherein:
said pretensioner unit (16) further includes a cover plate (168) that covers said tubular cylinder (162) and said block member (167), and
a bead (BD) is provided to said cover plate (168) at such a position as to cover at least one of said specific space (KS) and said passage in said block member (167).

## Patentansprüche

1. Gurtstraffer (1), aufweisend:
eine Wickeltrommel (13), welche einen Gurt (11) auf-/abwickelt; und
eine Gurtstraffereinheit (16), welche verursacht, dass die Wickeltrommel (13) in einer Aufwickelrichtung (YA4) des Gurts (11) dreht, wobei
die Gurtstraffereinheit (16) aufweist:
ein Zahnrad (165), welches eingerichtet ist, zusammen mit der Wickeltrommel (13) zu drehen;
einen Kolben (164), welcher eine Zahnstange (642) zum in Eingriff Bringen mit dem Zahnrad (165) aufweist und bewirkt, dass die Wickeltrommel (13) in die Aufwickelrichtung (YA4) über das Zahnrad (165) dreht;
einen rohrförmigen Zylinder (162), welcher den Kolben (164) bewegbar haltert; und
ein Gaserzeugungselement (161), welches einen Innenraum (NS) des rohrförmigen Zylinders (162) mit einem Gas füllt, das erzeugt wird, um den Kolben (164) anhand eines Drucks des Gases anzutreiben;
wobei der rohrförmige Zylinder (162) an einer Seitenfläche eine Durchgangsbohrung (625) zum Auslassen des Gases nach außen in Bezug auf den rohrförmigen Zylinder (162) aufweist,
wobei die Durchgangsbohrung (625) vorgesehen ist:
in einer Ursprungsposition des Kolbens (164) vor der Gaserzeugung in einer Position angeordnet zu sein, in welcher der Innenraum (NS) des rohrförmigen Zylinders (162) und der Bereich außerhalb des rohrförmigen Zylinders (162) nicht über die Durchgangsbohrung (625) verbunden sind; und
nach der Gaserzeugung in einer Position angeordnet zu sein, in welcher der Innenraum (NS) des rohrförmigen Zylinders (162), welcher sich durch Bewegung des Kolbens (164) verändert hat, und der Bereich außerhalb des rohrförmigen Zylinders (162) einen Verbindungszustand einnehmen, um über die Durchgangsbohrung (625) miteinander verbunden zu sein, **dadurch gekennzeichnet, dass**
der Gurtstraffer (1) weiterhin ein Blockelement (167) aufweist, welches angrenzend an einem Teil der Seitenfläche des rohrförmigen Zylinders (162) angeordnet ist, und
die Durchgangsbohrung (625) in einer Umfangsrichtung der Seitenfläche des rohrförmigen Zylinders (162) an einer solchen Position angeordnet ist, dass das Gas als Auslassgas in einen bestimmten Raum (KS) ausgelassen wird, der von einer Innenwand des Blockelements (167) und dem Teil der Seitenoberfläche des rohrförmigen Zylinders (162) festgelegt wird.

2. Gurtstraffer (1) nach Anspruch 1, wobei die Durchgangsbohrung (625) an einer Position vorgesehen ist, bei welcher der Verbindungszustand erhalten wird, wenn eine Kraft in der Aufwickelrichtung (YA4) zunächst auf die Wickeltrommel (13) durch den Betrieb der Gurtstraffereinheit (16) aufgebracht wird.

3. Gurtstraffer (1) nach Anspruch 1 oder 2, wobei:
die Gurtstraffereinheit (16) weiterhin einen Kupplungsmechanismus (169) aufweist, der bewirkt, dass eine Sperrklinke (692) bei Drehung des Zahnrads (165) hervorsteht, und der bewirkt, dass die Sperrklinke (692) mit einem Zahnrad (137) der Wickeltrommel (13) in Eingriff gebracht wird, um dadurch die Wickeltrommel (13) zusammen mit dem Zahnrad (165) zu drehen, und
die Durchgangsbohrung (625) an einer Position vorgesehen ist, bei welcher der Verbindungszustand erhalten wird, wenn die Sperrklinke (692) mit dem Zahnrad (137) der Wickeltrommel (13) in Eingriff steht.

4. Gurtstraffer (1) nach einem der Ansprüche 1 bis 3, wobei ein Dichtungselement (163) an einer Innenraumseitigen Fläche des Kolbens (164) angeordnet ist.

5. Gurtstraffer (1) nach einem der Ansprüche 1 bis 4, wobei:
der bestimmte Raum (KS) einen offenen Abschnitt (KS) aufweist, der nicht von der Innenwand des Blockelements (167) und dem Teil der Seitenfläche des rohrförmigen Zylinders (162) umgeben ist,
wobei der Gurtstraffer (1) in einem verbauten Zustand so konfiguriert ist, dass ein hitzebeständiges Element bei dem offenen Abschnitt (KS) angeordnet ist, und
wobei die Durchgangsbohrung (625) so angeordnet ist, dass in dem bestimmten Raum (KS) das Auslassgas, das von der Durchgangsbohrung (625) ausgelassen ist, zunächst auf das hitzebeständige Element, welches bei dem offenen Abschnitt (KS) angeordnet ist, auftrifft.

6. Gurtstraffer (1) nach einem der Ansprüche 1 bis 5, wobei:
das Blockelement (167) einen Durchgang aufweist, welcher das Auslassgas von dem bestimmten Raum (KS) führt, und
wobei der Durchgang komplex in dem Blockelement (167) aufgebaut ist.

7. Gurtstraffer (1) nach Anspruch 6, wobei:
die Gurtstraffereinheit (16) weiterhin eine Abdeckungsplatte (168) zum Abdecken des rohrförmigen Zylinders (162) und des Blockelements (167) aufweist, und
wobei ein Wulst (BD) an dem Deckel (168) an solch einer Position vorgesehen ist, so dass sie mindestens ein Element aus dem bestimmten Raum (KS) und dem Durchgang in dem Blockelement (167) abdeckt.

## Revendications

1. Dispositif de rétraction de ceinture de sécurité (1) comprenant :
an tambour d'enroulement (13) qui enroule la ceinture (11) ; et
une unité de prétensionneur (16) qui amène ledit tambour d'enroulement (13) à tourner dans une direction d'enroulement (YA4) de ladite ceinture (11), dans lequel
ladite unité de prétensionneur (16) comprend :
un pignon (165) configuré pour tourner en association avec ledit tambour d'enroulement (13) ;
un piston (164) qui comprend une crémaillère (642) pour engrener avec ledit pignon (165) et qui amène ledit tambour d'enroulement (13) à tourner dans ladite direction d'enroulement (YA4) par l'intermédiaire dudit pignon (165) ;
un cylindre tubulaire (162) qui contient de manière mobile ledit piston (164) ; et
un élément de génération de gaz (161) qui remplit un espace intérieur (NS) dudit cylindre tubulaire (162) avec un gaz généré pour entraîner ledit piston (164) par une pression dudit gaz ;
ledit cylindre tubulaire (162) comprend, sur une surface latérale de celui-ci, un trou traversant (625) pour libérer ledit gaz à l'extérieur dudit cylindre tubulaire (162),
ledit trou traversant (625) est prévu de manière à être situé :
à une position initiale dudit piston (164) avant la génération de gaz, à une position à laquelle l'espace intérieur (NS) dudit cylindre tubulaire (162) et ledit extérieur ne sont pas continus l'un avec l'autre par l'intermédiaire dudit trou traversant (625) ; et
après la génération de gaz, à une position à laquelle l'espace intérieur (NS) dudit cylindre tubulaire (162) qui a changé lors du déplacement dudit piston (164) et ledit extérieur passent dans un état continu de manière à être continus l'un avec l'autre par l'intermédiaire dudit trou traversant (625), **caractérisé en ce que**
le dispositif de rétraction de ceinture de sécurité (1) comprend en outre un élément formant bloc (167) agencé adjacent à une partie de la surface latérale dudit cylindre tubulaire (162), et
dans une direction circonférentielle de la surface latérale dudit cylindre tubulaire (162), ledit trou traversant (625) est prévu à une position telle que ledit gaz est libéré en tant que gaz d'échappement vers un espace spécifique (KS) défini par une paroi interne dudit élément formant bloc (167) et ladite partie de la surface latérale dudit cylindre tubulaire (162).

2. Dispositif de rétraction de ceinture de sécurité (1) selon la revendication 1, dans lequel ledit trou traversant (625) est prévu à une position à laquelle ledit état continu est obtenu lorsqu'une force dans ladite direction d'enroulement (YA4) est d'abord appliquée au dit tambour d'enroulement (13) par le fonctionnement de ladite unité de prétensionneur (16).

3. Dispositif de rétraction de ceinture de sécurité (1) selon la revendication 1 ou 2, dans lequel :
ladite unité de prétensionneur (16) comprend en outre un mécanisme d'embrayage (169) qui amène un cliquet (692) à faire saillie lors d'une rotation dudit pignon (165) et provoque la mise en prise dudit cliquet (692) avec un pignon (137) dudit tambour d'enroulement (13), pour faire tourner de ce fait ledit tambour d'enroulement (13) et ledit pignon (165) en association l'un avec l'autre, et
ledit trou traversant (625) est prévu à une position à laquelle ledit état continu est obtenu lorsque ledit cliquet (692) est en prise avec le pignon (137) dudit tambour d'enroulement (13).

4. Dispositif de rétraction de ceinture de sécurité (1) selon l'une quelconque des revendications 1 à 3, dans lequel un élément d'étanchéité (163) est prévu sur une surface dudit côté d'espace intérieur (NS) dudit piston (164).

5. Dispositif de rétraction de ceinture de sécurité (1) selon l'une quelconque des revendications 1 à 4, dans lequel :
ledit espace spécifique (KS) comprend une partie ouverte (KS) qui n'est pas entourée par la parointerne dudit élément formant bloc (167) et par ladite partie de la surface latérale dudit cylindre tubulaire (162),
dans un état assemblé, ledit Dispositif de rétraction de ceinture de sécurité (1) est configuré de sorte qu'un élément résistant à la chaleur soit situé au niveau de ladite partie ouverte (KS), et
ledit trou traversant (625) est prévu de sorte que, dans ledit espace spécifique (KS), ledit gaz d'échappement libéré à partir dudit trou traversant (625) frappe d'abord ledit élément résistant à la chaleur situé au niveau de ladite partie ouverte (KS).

6. Dispositif de rétraction de ceinture de sécurité (1) selon l'une quelconque des revendications 1 à 5, dans lequel :
ledit élément formant bloc (167) comprend un passage qui guide ledit gaz d'échappement à partir dudit espace spécifique (KS), et
ledit passage est configuré d'une manière complexe dans ledit élément fermant bloc (167).

7. Dispositif de rétraction de ceinture de sécurité (1) selon la revendication 6, dans lequel :
ladite unité de prétensionneur (16) comprend en outre une plaque de recouvrement (168) qui recouvre ledit cylindre tubulaire (162) et ledit élément formant bloc (167), et
un bourrelet (BD) est prévu au niveau de ladite plaque de recouvrement (168) à une position telle qu'il recouvre au moins l'un dudit espace spécifique (KS) et dudit passage dans ledit élément formant bloc (167).
